**Europäisches Patentamt**

**European Patent Office**

**Office européen des brevets**

(19)

(11) Veröffentlichungsnummer : **0 324 412 B1**

(12)

# EUROPÄISCHE PATENTSCHRIFT

(45) Veröffentlichungstag der Patentschrift :
**20.05.92 Patentblatt 92/21**

(51) Int. Cl.⁵ : **A01F 15/04, A01D 85/00**

(21) Anmeldenummer : **89100290.9**

(22) Anmeldetag : **10.01.89**

(54) **Verfahren und Vorrichtung zum Ernten von Feldfutter.**

(30) Priorität : **11.01.88 DE 3800479**
**01.06.88 DE 3818578**
**30.08.88 DE 3829314**

(43) Veröffentlichungstag der Anmeldung :
**19.07.89 Patentblatt 89/29**

(45) Bekanntmachung des Hinweises auf die
Patenterteilung :
**20.05.92 Patentblatt 92/21**

(84) Benannte Vertragsstaaten :
**BE DE FR GB NL**

(56) Entgegenhaltungen :
**DE-A- 3 004 431**

(56) Entgegenhaltungen :
**DE-A- 3 337 634**
**DE-A- 3 640 166**
**FR-A- 2 350 783**
**GB-A- 2 059 869**

(73) Patentinhaber : **Eggenmüller, Alfred, Dr.-Ing.**
**Schützenweg 10**
**W-7915 Elchingen 1 (DE)**

(72) Erfinder : **Eggenmüller, Alfred, Dr.-Ing.**
**Schützenweg 10**
**W-7915 Elchingen 1 (DE)**

(74) Vertreter : **Kahler, Kurt, Dipl.-Ing.**
**Patentanwälte Kahler & Käck Gerberstrasse 3**
**Postfach 1249**
**W-8948 Mindelheim (DE)**

## Beschreibung

Die Erfindung betrifft ein Verfahren und eine Vorrichtung zum Ernten von Feldfutter gemäß den oberbegrifflichen Merkmalen des Patentanspruches 1 und 2.

Ein gattungsgemäßes Verfahren und eine derartige Vorrichtung zur Durchführung des Verfahrens sind aus der GB-A-20 59 869 bekannt. Dort wird mittels einer rotierenden Preßvorrichtung das Futter portionweise zu einem Preßstrang verdichtet, der Preßgutstrang in eine Stapelkammer gedrückt, die einzelnen Strangabschnitte zu einem Schichtballen gestapelt, anschließend gebunden und auf dem Boden abgelegt. Der dabei vorgeschlagene Packer (Stopfgabel), der zum raschen Überschieben der vorverdichteten Futterpakete erforderlich ist, ist jedoch aufgrund des komplizierten Antriebes baulich aufwendig.

Weiterhin ist nachteilig, daß der erreichbaren Verdichtung trotz der relativ hohen Vorverdichtung durch den Zinkenrotor Grenzen gesetzt sind, da elastische Rückdehnungen des Preßgutstranges vor allem beim Überschieben der einzelnen Futterpakete in den Stapelraum eintreten können. Hierdurch fallen die einzelnen Futterpakete aus einander, sodaß im oberen Bereich des Stapelkanals weniger Preßguf vorhanden ist und dadurch die Ballenform ungleich mäßig wird.

Außerdem ist eine Ballenpresse mit geschlossenem Stapelraum aus der DE-A-27 20 883 bekannt. Hierbei ist nachteilig, daß beim Stapeln der Boden des Stapelraumes Schicht für Schicht zurückweichem muß. Dies erfordert einen zusätlichen Antriebsaufwand und lange Führungen über die Hauptrichtung des Spatelraums. Zudem ist nachteilig, daß nach erfolgter Bindung eines Schichballens der Staplerboden bzw die Rückwandklappen in ihre Ausganslage zurückgebracht werden müssen. Selbst bei sehr leistungsfähigen Antriebsvorrichtungen für den Staplerboden ergeben sich mehrere Sekunden, bis der Staplerboden aus seiner tiefsten Stellung in die oberste Stellung zurückgefahren wird. Da in dieser Zeit kein gepreßtes Feldfutter in den Staplerraum eingeführt werden kann; ergibt sich ein zeitlich unterbrochenes Ernteverfahren. Auch hier tritt eine elastische Rückdehnung der vorverdichteten Erntegutportionen auf, die die erreichbare Gesamtverdichtung und die Gleichmäßigkeit der Ballenform beeinträchtigt.

Demzufolge liegt der Erfindung die Aufgabe zugrunde, ein Verfahren und eine entsprechende Vorrichtung zur Durchführung des Verfahrens zu schaffen, bei denen der bauliche Aufwand geringer ist. Zudem soll die erreichbare Verdichtung des Ballens gesteigert werden, die Ballenform möglichst gleichmäßig sein und ein kontinuierlicher Betrieb ermöglicht werden.

Diese Aufgabe wird durch ein Verfahren und eine Vorrichtung gemäß den Patentansprüchen 1 bzw. 2 gelöst.

Zur Bildung eines Schichtballens nach erfolgter Preßung eines die Schichten bildenden Preßgutstranges ist lediglich eine einfache Preßplatte mit einem kurzen Hub, etwa entsprechend der Schichtdicke, notwendig, um die einzelnen Schichten in dem Stapelkanal weiterzuschieben. Gegenüber der ansonsten üblichen Bauweise mit schwerbauendem Preßkolben, Stopfgabel Kurbelgetriebe reduziert sich der Bau- und Platzaufwand in ganz erheblicher Weise.

Zudem ist durch die Beaufschlagung des Preßgutstranges an der flachen Seite eine Weiterverdichtung zum Schichtballen möglich, da der Preßgutstrang bereits selbst hoch verdichtet ist und nunmehr zusätzlich in einer um 90° versetzten Preßrichtung weiter beaufschlagt wird. Somit ist gegenüber den üblichen Strangpreßverfahren, in denen die Verdichtung im Stapelkanal selbst nur in einer Richtung erfolgt, eine Rückfederung des

Erntegutes praktisch ausgeschlossen, sc daß sich keine energieaufwendige Mehrfachverdichtung des rückfedernden Erntegutes ergibt.

Da das Erntegut dem Stapelkanal bereits in hochverdichteter Form als Preßgutstrang zugeführt wird, kann die Hublänge zum Aneinanderpressen der zugeführten Schichten sehr klein sein.

Da es im Gegensatz zu der üblichen Bauart nicht mehr nötig ist, den Preßkolben beträchtlich über die Zufuhröffnung zu der Ballenkanal hinaus anzutreiben, kann eine konische Verengung des Speicherkanals unmittelbar an die Zufuhröffnung anschließen, so daß sich hierdurch zur Anpassung an die gewünschte Preßung eine frühzeitige weitere Verdichtung des Schichtballens ergibt.

Durch den kurzen Hub der Preßplatte ergibt sich zudem ein sehr kurzzeitiges Verschließen der Zuführöffnung, so daß der Gutstrom nur kurzzeitig unterbrochen wird. Dadurch ist es möglich, daß der nachströmende Preßgutstrang in der Zwischenzeit innerhalb des Preßkanals zwischengespeichert wird, so daß für den Preßgutstrang sehr hohe Verdichtungen gewählt werden können.

Für höhere Bergeleistungen kann der Preßkanal, der den Preßgutstrang ausbildet, nachgiebig gestaltet werden, so daß sein Fassungsvermögen kurzzeitig größer wird. Dabei kann es zweckmäßig sein, zwischen der Preßeinrichtung für den Gutsstrang und dem Stapelkanal die Speicherstrecke solang zu wählen, daß eine Schichthöhe des Schichtballens in ihr gespeichert werden kann. Das Einpressen des Preßgutstranges in den Stapelkanal erfolgt dabei durch die vorgeschaltete Preßeinrichtung selbst, so daß eine zusätzliche Fördervor-

2

richtung erforderlich ist.

Zur weiteren Erhöhung der Bergeleistung insbesondere während des Zeitraumes, in dem der Schichtballen gebunden wird, kann für den weiterhin kontinuierlich eingepreßten Preßgutstrang ein zusätzliches Speichervolumen geschaffen werden, in das der hochverdichtete Preßgutstrang, der selbst praktisch nicht mehr weiter zu verdichten ist, ausweichen kann. Eine besonders vorteilhafte Möglichkeit hierzu bietet eine teleskopierbare Preßplatte, deren Schieberteile in Preßstellung der Preßplatte durch den Druck des Preßgutstranges ineinander verschienbar sind, so daß der Preßgutstrang in dem Stapelkanal nachfließen kann. Nach dem Zurückkehren in die Ausgangslage der Preßplatte kann das vorher angehobene Schieberteil durch Eigengewicht oder einen gesonderten Antrieb auf die ursprüngliche Höhe zurückbewegt werden.

Als weitere Möglichkeit, um zusätzliches Speichervolumen während der knüpfzeit zu schaffen, wird vorgeschlagen, eine anhebbare Abstreifwand am Zinkenrotor vorzusehen, wobei kurzfristig die Weiterverdichtung des im Preßkanal befindlichen Preßgutstranges unterbrochen wird.

Weitere vorteilhafte Ausgestaltungen sind Gegenstand der Unteransprüche. In der nachfolgenden Beschreibung der Figuren werden mehrere Ausführungsbeispiele näher erläutert Hierbei zeigt:

Fig. 1 eine Schichtballenpresse mit anhebbarer Abstreifwand,

Fig. 2 eine Schichtballenpresse gemäß Fig. 1 mit angehobener Abstreifwand,

Fig. 3 eine Schichtballenpresse gemäß Fig. 1 in Draufsicht,

Fig. 4 eine Schichtballenpresse gemäß Fig. 1 ohne zusätzliche Fördereinrichtung,

Fig. 5 ein Schichtballenpresse mit teleskopierbarer Preßplatte,

Fig. 6 eine Schichtballenpresse gemäß Fig. 5 in Draufsicht.

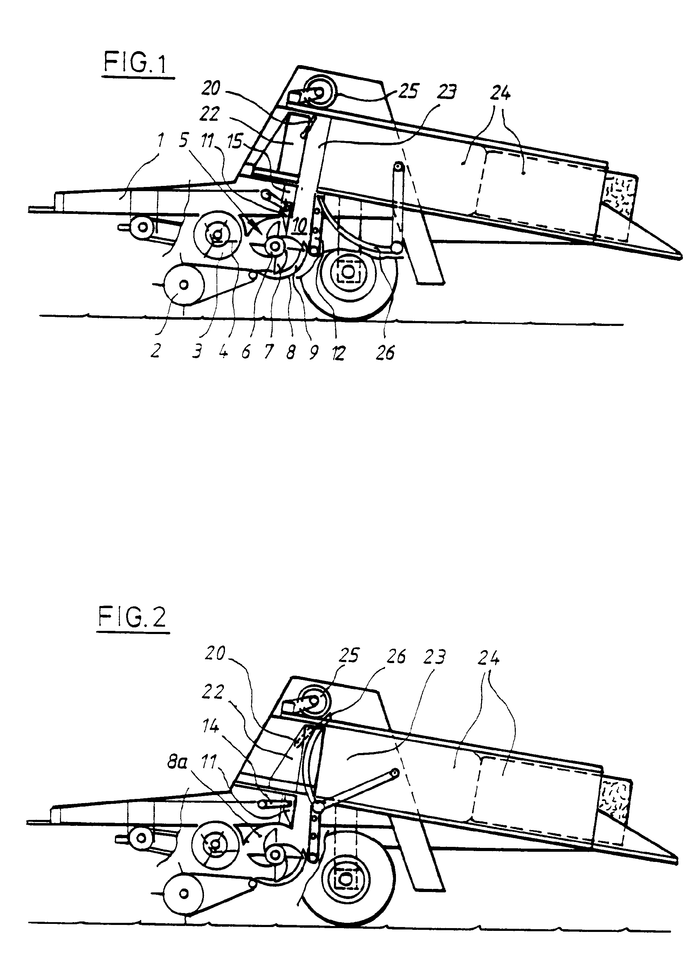

Fig. 1 zeigt eine Schichtballenpresse in Seitenansicht mit einem Fahrgestell 1, an dem eine Pick-up-Trommel 2, eine Querförderschnecke 3 mit einem Zubringer 4 vor einer Preßvorrichtung 5 angeordnet ist. Die Preßeinrichtung 5 besteht im wesentlichen aus einem Zinkenrotor 6, an dem eine Vielzahl von Zinken 7 spiralförmig angeordnet sind. Diese Zinken 7 greifen in Rillen 9 eines Zinkenrotormantels 8 ein, der den Zinkenrotor 6 umgibt und sich in einem Preßkanal 10 fortsetzt. Durch eine geschlitzte Abstreifwand 11 verlassen die Zinken 7 den Preßkanal 10, der in weiterer Fortsetzung durch verstellbare Kanalwände 12 und 15 gebildet wird. Diese in Fahrtrichtung hintere und vordere Kanalwand 12 und 15 sind durch nicht näher dargestellte Verstellvorrichtungen 14 verstellbar, so daß hierdurch die Kanalweite vergrößert bzw. verkleinert werden kann, um die Verdichtung und die erreichbare Preßung des Preßgutstranges in dem Preßkanal 10 einzustellen.

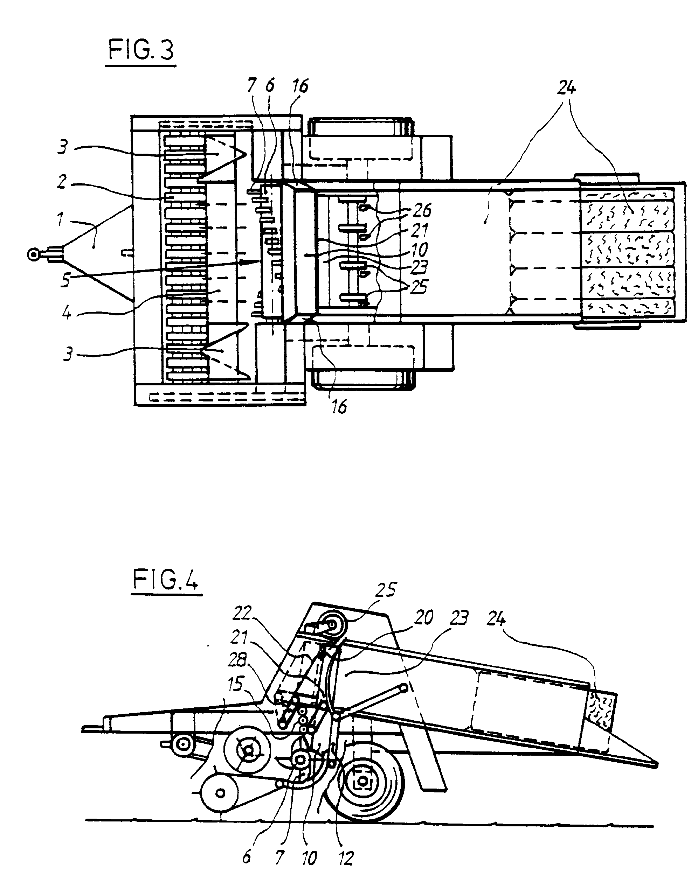

Das durch die Pick-up-Trommel 2 aufgenommene Feldfutter wird der Preßeinrichtung 5 zugeführt und im Zusammenwirken der Zinken 7 mit den Rillen 9 verdichtet. Ein weiterer Beitrag zur Verdichtung leistet hierbei die Abstreifwand 11, an der das geförderte Erntegut unter Gegendruck des sich in dem Preßkanal 10 befindlichen Preßgut weiter verdichtet wird. Durch die Preßvorrichtung 5 wird somit das Erntegut durch Zerreißen, Quetschen und Zerdrücken zu einem hochverdichteten Preßgutstrang gepreßt, dessen Verdichtung auf Grund der bleibenden Verformung des Feldfutters an den Rillen 9 und der Abstreifwand 11 im wesentlichen erhalten bleibt. Die erreichbare Verdichtung wird dabei auch von der Kanalweite des Preßkanals 10 und der Neigung der Seitenwände 16 (vgl. Fig. 3) beeinflußt.

Am vorderen Ende eines Stapelkanals 23 ist eine über eine Zuführöffnung 21 (vgl. Fig. 4) hinwegbewegbare Preßplatte 22 vorgesehen, die in Fig. 2 und 4 in der Preßstellung, in der sie den in den Stapelkanal 23 eingepreßten Preßgutstrang zur rückwärtigen Öffnung des Stapelkanals 23 fördert, dargestellt ist. Durch das Weiterschieben der vorher in den Stapelkanal 23 gefördertern Schicht wird diese an die dort lagernden Schichten eines Schichtballens 24 angepreßt und zusammen mit diesen weitetransportiert. Hat der Schichtballen 24 die gewünschte Länge bzw. Anzahl der Schichten erreicht, so erfolgt über ein Zählwerk die Auslösung zum Binden mittels einer Bindfevorrichtung 25 und einer Bindenabel 26, wie dies in Fig. 2 dargestellt ist, während in Fig. 1 die Normalposition der Bindenabel 26 unterhalb des Stapelkanals 23 eingezeichnet ist. Durch das Binden entstehen Schichtballen 24, die hier etwa zwei Drittel der Länge des Stapelkanals 23 einnehmen.

Fig. 1 zeigt mit gleichen Bezugszeichen im wesentlichen die gleiche Anordnung wie in Fig. 2 und 4, wobei hier die Preßplatte 22 in der Stellung dargestellt ist, in der die Zuführung des Prßegutes aus dem Preßkanal 10 mittels der Preßeinrichtung 5 (Zinkenrotor 6, Zinken 7) möglich ist. Die Zinken 7 streifen dabei das Erntenut an der geschlitzten Abstreifwand 22 ab und fördern somit den Preßgutstrang unter hoher Verdichtung nach oben, bis dieser den Auslöser 20 erreicht. Dadurch wird die Preßplatte 22 betätigt, wodurch diese in den Stapelkanal 23 in Richtung auf das rückwärtige, offene Ende (in den Fig. jeweils rechts dargestellt) bewegt wird. Dadurch ergibt sich dann die Stellung der Preßplatte 22, wie dies in Fig 2 dargestellt ist.

Zugleich mit der Schiebe- und Preßbewegung der Preßplatte 22, wie dies im Übergang von Fig. 1 zu Fig. 2 verdeutlicht ist, wird die Abstreifwand 11 mittels der Verstelleinrichtung 14 angehoben, und mit der oberen Kanalwand 15 in Deckung gebracht, so daß die Zinken des Zinkenrotors das bei kontinuierlicher Betriebsweise eintretende Erntegut an der AAbstreifwand 11 nicht mehr abstreifen und verdichten können, sondern ringsum zu einem Ringraum 8a, als Teil des Zinkenrotormantels 8, fördern können. Dadurch entsteht ein zusätzlicher

3

Speicherraum, der während des Verschlußes der Zuführöffnung 21 das weiterhin geförderte Erntegut im wesentlichen unverdichtet aufnehmen kann, ohne eine Überlastung der preßgutführenden Maschinenteile zu verursachen.

In Fig. 3 ist die Anordnung der Querförderschnecke 3 hinter der Pick-up-Trommel 2 und vor dem Zinkenrotor 6 dargestellt, ebenso die schraublinienförmige Anordnung der Zinken 7 des Zinkenrotors 6. Aus der Draufsicht ist zudem die geneigte Anordnung der Seitenwände 16 und die Querschnittsform des Preßkanals 10 zu erkennen. Dabei ist die in Längsrichtung der Schichtballenpresse relativ geringe Ausdehnung des Preßkanals 10 erkennbar, wodurch sich bei ansonsten vergleichbarem Erntegut-Durchsatz der relativ geringe Hub der Preßvorrichtung 22 (vgl. Fig. 1) in vorteilhafter Weise ergibt. Weiterhin ist der Verlauf der nicht näher bezeichneten Bindegarne des gebundenen Schichtballens 24 zu erkennen, die durch die Bindevorrichtung 25 und die Bindenadeln 26 geknüpft werden.

In Fig. 4 ist eine bevorzugte Ausführungsform dargestellt, die ohne zusätzliche Fördereinrichtung auskommt. Das im Preßkanal 10 befindliche Preßgut wird dabei kontinuierlich durch die Zinken 7 des Zinkenrotors 6 in den Stapelkanal 23 durch die Zuführöffnung 21 eingespeist. Diese Preßgutzuführung wird lediglich durch die Preßbewegung der Preßplatte 22 kurzfristig unterbrochen, wie dies hier dargestellt ist. In der hier links dargestellten, strichlierten Position der Preßplatte 22 wird der Stapelkanal 23 jedoch über den Großteil der Zeit kontinuierlich befüllt und erst bei Erreichen des Auslösers 20, der am oberen Ende des Stapelkanals 23 vorgesehen ist, wird die Preßplatte 22 über Schwinghebel 28 kurzfristig in die hier gezeichnete Preßstellung gebracht. Da der im Preßkanal 10 befindliche Preßgutstrang hoch verdichtet ist, kann während dem Absperren der Zuführöffnung 21 das nachströmende Erntegut aufgrund nachgiebiger Kanalwände 12 und 15 ausweichen. Nachdem die Preßplatte 22 die Zuführöffnung 21 wieder freigegeben hat (strichlierte Stellung der Preßplatte 22) kann der Preßgutstrang wieder in den Stapelkanal 23 zugeführt werden, wobei zugleich die Verstellwände 12 und 15 in ihre Normallage zurückgehen.

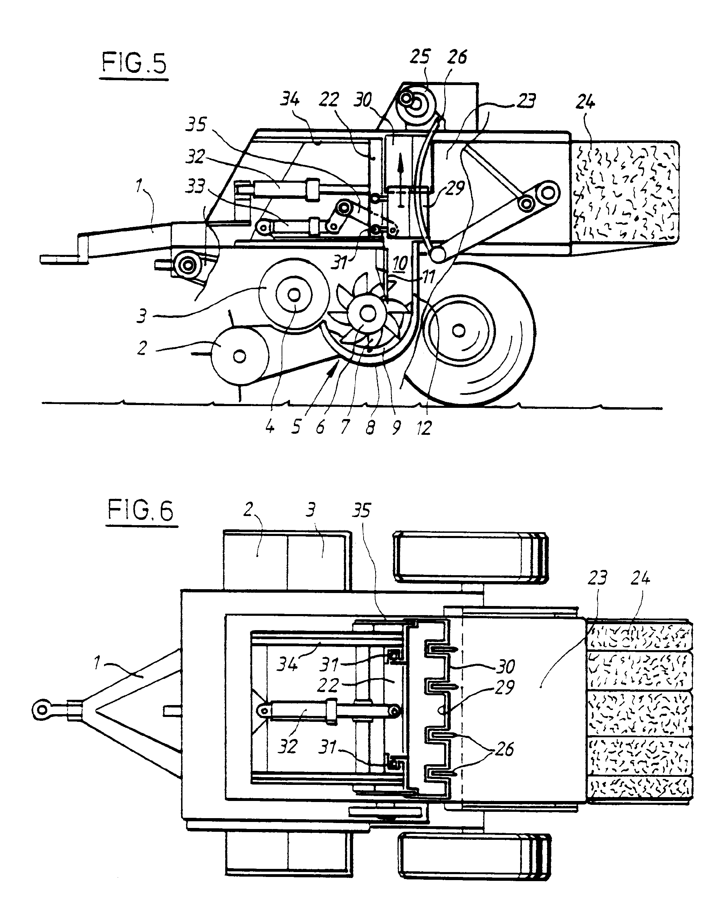

Eine weitere besonders vorteilhafte Ausführung, einen zusätzlichen Speicherraum zu schaffen, ist in Fig. 5 dargestellt. Dabei besteht die Preßplatte 22 im wesentlichen aus zwei ineinander verschiebbaren Schieberteilen 29 und 30. In der hier gezeigten Stellung während des Bindens des Schichtballens 24 durch die Bindenadel 26, ist die Zufuhr zum Stapelkanal 23 kurzfristig unterbrochen. Um hierbei keine Überlastung des hier im Interesse einer niedrigen Bauhöhe der Schichtballenpresse besonders kurz gewählten Preßkanals 10 zu verursachen oder die kontinuierliche Erntegutzufuhr zu unterbrechen, ist.das untere Schieberteil 29 an Führungen 31 teleskopierbar gelagert und durch den weiterhin einfließenden Preßgutstrang aus dem Preßkanal 10 anhebbar. Während des hier dargestellten Bindevorganges ist der Schichtballen 24 zumindest durch das obere Schiebeteil 30 in Richtung des Stapelkanals 23 weiterhin beaufschlagt, so daß sich dieser während des Bindens nicht zurückdehnen kann. Dabei ist die kontinuierliche Preßgut-Zufuhr zum Stapelkanal 23 nicht unterbrochen. Nach der Zurückbewegung (hier nach links) der Preßplatte 22 mit den damit verbundenen Schieberteilen 30 und 29 mittels eines Preßzylinders 32 an einer Schiebeführung 34 wird das vorher durch den Preßgutstrang angehobene untere Schiebeteil 29 durch eine Betätigungsvorrichtung 33 und einen Winkelhebel 35 wieder auf die ursprüngliche Höhe abgesenkt. Diese Rückführung von der angehobenen Höhe auf die hier in Fig. 5 dargestellte Höhe im unteren Bereich des Stapelkanals 23 kann in vorteilhafter Weise auch durch das Eigengewicht des Schieberteils 29 selbst erfolgen, so daß Betätigungsvorrichtung 33 und Winkelhebel 35 entfallen können.

Fig. 6 zeigt die Anordnung gemäß Fig. 5 in Draufsicht, wobei die ineinandergeschachtelte Anordnung des Schieberteils 29 innerhalb des Schieberteils 30 ersichtlich ist. Ebenso kann selbstverständlich das untere Schieberteil 29 das obere Schieberteil 30 in sich aufnehmen bzw. umfassen. Ebenso ist eine Ausführung der Preßplatte 22 mit mehr als zwei ineinander teleskopierbaren Schieberteilen möglich. Wesentlich ist dabei nur, daß während der Zeit, in der die Zufuhr zum Stapelkanal 23 durch die sich in Preßstellung befindliche Preßplatte 22 unterbrochen ist, Teile der Preßplatte 22, hier insbesondere das untere Schiebeteil 29, in Richtung des Preßkanals bewegbar ist, um Raum für den kontinuierlich aus dem Preßkanal 10 austretenden Preßgutstrang zu schaffen. Bei der hier gewählten Teleskoplösung ist dabei von Vorteil, daß der Druck auf den Schichtballen durch die Ausweichbewegung des unteren Schieberteils 29 praktisch nicht reduziert wird.

Durch die hier vorgeschlagenen Maßnahmen werden sehr hoch verdichtete, gut ausgeformte Rechteckgroßballen mit relativ geringem Kraftbedarf und Bauaufwand erreicht. Durch die verschiedenen vorgeschlagenen Zwischenspeichemaßnahmen wird eine Überbrückung der Binde- und Knüpfzeit ohne weiteres erreicht, so daß hohe Bergeleistungen nicht mehr die bisherigen Grenzen gesetzt sind. Dabei kann der Preßgutstrang durch die vorgeschaltete Preßeinrichtung extrem hoch verdichtet werden und durch die Preßplatte an der um 90° versetzten Flachseite beim Weiterschieben und Aneinanderpressen im Stapelkanal weiterverdichtet werden, so daß bedeutend höhere Ballendichten erzielbar sind.

**Patentansprüche**

1. Verfahren zum Ernten von Feldfutter, wie Heu, Stroh, Grassilage, wobei das aufgenommene Erntegut in einer Preßvorrichtung (5) im Zusammenwirken mit einem zugeordneten Preßkanal (10) unter Gegendruck zu einem Preßgutstrang verdichtet wird, sowie einem Stapelraum (23) zugeführt wird, dort aneinandergestapelt und anschließend zu einem im Querschnitt im wesentlichen rechteckigen Schichtballen (24) gebunden wird, wobei der Preßgutstrang Senkrecht zu seiner vorschubichtung durch eine weitere Preßvorrichtung (22) weiterverdichtet wird, an die vorhergehenden Schichten in dem als Stapelkanal (23) ausgebildeten Stapelraum angepreßt und schichtweise unter Gegendruck in dem an seinem hinteren Ende offenen Stapelkanal (23) weitergeschoben wird, dadurch gekennzeichnet, daß der durch Zerreißen, Quetschen und Zerdrücken des Erntegutes im Preßkanal (10) gebildete Preßgutstrang als kontinuierlich er Preßgutstrang im wesentlichen senkrechte nach oben bis zum Erreichen des oberen Ende des Stapelkanals (23) in diesen eingepreßt wird, dann durch die Wirkenung des Preßgutstrangs die Preßvorrichtung (22) ausgelöst, der Preßgutstrang in seinem Vollem Querschnitt abgetrennt und um etwa seine Schichtdicke weiterbewegt wird.

2. Vorrichtung zur Durchführung des Verfahrens nach Anspruch 1, unter Verwendung einer Preßvorrichtung (5), die als Zinkenrotor (6) mit starren Zinken (7) ausgebildet ist, an den sich ein den Preßgutstrang formender Preßkanal (10) anschließt, sowie einem sich daran anschließenden Stapelraum (23) zur Bildung von im wesentlichen rechteckigen Schichtballen (24), wobei der Stapelraum als liegend angeordneter, zu seinem hinteren Ende hin offener Stapelkanal (23) ausgebildet ist um am vorderen Ende eine Preßplatte (22) zur Weiterverdichtung und Anpressen an die vorhergehende Schicht vorgesehen ist, dadurch gekennzeichnet, daß am oberen Begrenzungswand des Stapelkanals (23) gegenüber der Einlaßöffnung des Preßgutstrangs ein Auslöser (20) vorgesehen ist, der bei Erreichen durch den Preßgutstrang die Bewegung der Preßplatte (22) auslöst, anderen unteren Ende eine Trennvorrichtung befestigt ist, wobei die Preßplatte einen Hub von etwa der Schichtdicke des Preßgutstrangs aufweist.

3. Vorrichtung nach Anspruch 2, dadurch gekennzeichnet, daß vor dem Stapelraum (23) eine Speicherstrecke mit der Länge einer Schicht des Schichtballens (24) vorgesehen ist.

4. Vorrichtung wenigstens nach Anspruch 2, dadurch gekennzeichnet, daß der Preßkanal (10) durch einstellbare Kanalwände (12, 14, 15) ein variables Speichervolumen aufweist.

5. Vorrichtung wenigstens nach Anspruch 2, dadurch gekennzeichnet, daß der Preßkanal (10) eine periodisch vom Zinkenrotor (6) entfernbare und annäherbare Abstreifwand (11) aufweist.

6. Vorrichtung wenigstens nach Anspruch 2, dadurch gekennzeichnet, daß die Preßplatte (22) aus wenigstens zwei ineinander teleskopierbaren Schieberteilen (29, 30) besteht, die in Preßstellung unter Druck des Preßgutstranges ineinander verschiebbar sind und in der Ausgangslage der Preßplatte (22) das angehobene Schieberteil (29) rückführbar ist.

7. Vorrichtung nach Anspruch 6, dadurch gekennzeichnet, daß das untere Schieberteil (29) in der Ausgangslage der Preßplatte (22) durch die Schwerkraft auf die ursprüngliche Höhe zurückfällt.

8. Vorrichtung nach einem der Ansprüche 2 bis 7, dadurch gekennzeichnet, daß die Zinken (7) des Zinkenrotors (6) periodisch in Rillen (9) eines Zinkenrotormantels (8) eingreifen.

**Claims**

1. A method for harvesting field-fodder, as hay, straw, grasssilage, wherein the picked-up field fodder is compressed under counter-pressure to a layer of compressed material in a compressing device (5) in cooperation with a corresponding compressing channel (10) and further conveyed to a baling chamber (23), stacked therein and then knotted to a bale (24) of essentially rectangular cross-section, wherein the layer of compressed material is further compacted perpendicular to its conveying direction by a further compressing device, pressed onto the preceding layers in the baling chamber formed as a baling channel (23) and conveyed in layers against the counter-pressure within the baling channel (23) having a rear discharge opening, characterized in that the layer of compressed material formed in the pressing channel (10) by shredding, mashing and crushing is pressed as continuous layer of compressed material essentially vertically in upward direction into the baling channel (23) until its arrival at the upper end of the baling channel (23), then the compressing device (22) is actuated by the layer of compressed material which is cut-off across its full cross-section and is moved on by about its thickness.

2. Apparatus for performing the method of claim 1, using a compressing device (5) formed as a tine-rotor (6) having rigid tines (7) followed by a press channel (10) for forming the layer of compressed material, in turn followed by a baling chamber (23) for forming an essentially rectangular bale (24), wherein the baling chamber is formed as a horizontally arranged baling channel (23) being open at its rearward end and having arranged a compressing plate (22) at its front end for further compressing and pressing towards the preceding layer, characterized in that there is provided at the upper end edge of the baling channel (23) opposite to the inlet opening for the layer of compressed material a releasing element (20) for initiating the movement of the compressing plate (22) upon arrival of the layer of compressed material, the lower end of the compressing plate (22) having fixed thereto a cutting device, the compressing plate having a stroke distance essentially corresponding to the thickness of the layer of compressed material.

3. Apparatus according to claim 2, characterized in that there is provided a buffer-portion in front of the baling chamber (23), the buffer-portion having a length corresponding to that of one layer of the bale (24).

4. Apparatus at least according to claim 2, characterized in that the pressing channel (10) comprises adjustable walls (12, 14, 15) to vary its accumulation volume.

5. Apparatus at least according to claim 2, characterized in that the pressing channel (10) comprises a slotted wall (11) periodically movable away and towards the tine-rotor (6).

6. Apparatus at least according to claim 2, characterized in that the compressing plate (22) comprises at least two telescopable slide elements (29, 30) being telescopable into each other in the press position upon pressure of the layer of compressed material and the lifted slide element (29) is adapted to be returned in the home position of the compressing plate (22).

7. Apparatus according to claim 6, characterized in that the lower slide element (29) falls back into its starting height by gravity in the home position of the compressing plate (22).

8. Apparatus according to one of claims 2 to 7, characterized in that the tines (7) of the tine-rotor (6) periodically engage grooves (9) of a tine-rotor casing (8).

**Revendications**

1. Procédé pour récolter du fourrage, tel que du foin, de la paille ou des graminées, le produit récolté recueilli étant comprimé en un boudin de matière pressée dans un dispositif de pressage (5) en coopération avec un canal de pressage associé (10) et avec contre-pression, et étant amené à une chambre d'empilage (23), où les boudins sont pressés les uns contre les autres puis réunis en une balle stratifiée (24) de section sensiblement rectangulaire, le boudin de matière pressée étant à nouveau comprimé perpendiculairement à sa direction d'avancement par un autre dispositif de pressage (22), pressé contre les couches précédentes dans la chambre d'empilage configurée en canal d'empilage (23), et poussé plus loin, couche par couche et avec contre-pression, dans le canal d'empilage (23) ouvert à son extrémité arrière, **caractérisé** en ce que le boudin de matière pressée, formé dans le canal de pressage (10) par déchiquetage, écrasement et compression du produit récolté, est introduit par pression dans le canal d'empilage (23), sous la forme d'un boudin continu de matière pressée et sensiblement verticalement vers le haut, jusqu'à l'atteinte de l'extrémité supérieure de ce canal, à la suite de quoi le dispositif de pressage (22) est déclenché par l'action du boudin de matière pressée, et le boudin de matière pressée est sectionné sur toute sa section et déplacé plus loin d'environ son épaisseur de couche.

2. Dispositif pour la mise en oeuvre du procédé selon la revendication 1, en utilisant un dispositif de pressage (5) réalisé sous la forme d'un rotor à dents (6) présentant des dents rigides (7) et auquel se raccorde un canal de pressage (10) formant le boudin de matière pressée, ainsi qu'une chambre d'empilage (23) se raccordant au canal et destinée à former des balles stratifiées (24) sensiblement rectangulaires, la chambre d'empilage étant configurée en canal d'empilage (23) disposé horizontalement et ouvert vers son extrémité arrière, et une plaque de pressage (22) étant prévue à l'extrémité avant pour comprimer à nouveau le boudin et le presser contre la couche précédente, **caractérisé** en ce qu'un déclencheur (22) est prévu en vis-à-vis de l'ouverture d'admission du boudin de matière pressée sur la paroi de délimitation supérieure du canal d'empilage (23) et, lorsqu'il est atteint par le boudin de matière pressée, déclenche le mouvement de la plaque de pressage (22), à l'extrémité inférieure de laquelle est fixé un dispositif de sectionnement, la plaque de pression présentant une course approximativement égale à l'épaisseur de couche du boudin de matière pressée.

3. Dispositif selon la revendication 2, caractérisé en ce qu'un parcours de stockage ayant la longueur d'une couche de la balle stratifiée (24) est prévu avant la chambre d'empilage (23).

4. Dispositif selon la revendication 2 au moins, caractérisé en ce que le canal de pressage (10) présente un volume de stockage qui peut être modifié par des parois de canal réglables (12, 14, 15).

5. Dispositif selon la revendication 2 au moins, caractérisé en ce que le canal de pressage (10) présente une paroi racleuse (11) qui peut être périodiquement éloignée et rapprochée du rotor à dents (6).

6. Dispositif selon la revendication 2 au moins, caractérisé en ce que la plaque de pressage (22) est constituée d'au moins deux parties (29, 30) coulissantes l'une dans l'autre de manière télescopique, qui peuvent être coulissées l'une dans l'autre dans la position de pressage, sous la pression du boudin de matière pressée, la partie coulissante relevée (29) pouvant être ramenée dans la position initiale de la plaque de pressage (22).

7. Dispositif selon la revendication 6, caractérisé en ce que la partie coulissante inférieure (29) retombe par la force centrifuge à la hauteur initiale dans la position initiale de la plaque de pressage (22).

8. Dispositif selon l'une des revendications 2 à 7, caractérisé en se que les dents (7) du rotor à dents (6) s'engagent périodiquement dans des gorges (9) d'une enveloppe de rotor à dents (8).

FIG.1

FIG.2

FIG. 3

FIG.4

FIG.5

FIG.6